# EUROPEAN PATENT SPECIFICATION

(11) **EP 4 201 775 B1**
(45) Date of publication and mention of the grant of the patent: **25.09.2024**
(21) Application number: 22216177.0
(22) Date of filing: 22.12.2022
(51) Int. Cl.: B60W 30/182, B60W 50/14

(54) **INFORMATION PROCESSING APPARATUS, VEHICLE SYSTEM AND INFORMATION PROCESSING METHOD**
INFORMATIONSVERARBEITUNGSVORRICHTUNG, FAHRZEUGSYSTEM UND INFORMATIONSVERARBEITUNGSVERFAHREN
APPAREIL DE TRAITEMENT D'INFORMATIONS, SYSTÈME DE VÉHICULE ET PROCÉDÉ DE TRAITEMENT D'INFORMATIONS

(30) Priority: 22.12.2021 JP 2021208621
(43) Date of publication of application: 28.06.2023
(73) Proprietor: TOYOTA JIDOSHA KABUSHIKI KAISHA, Aichi-Ken 471-8571 (JP)
(72) Inventor: KUWAHARA, Takafumi, TOYOTA-SHI, AICHI-KEN 471-8571 (JP)
(74) Representative: Cabinet Beau de Loménie

(56) References cited:
- US-A1- 2016 042 650
- US-A1- 2017 217 446
- US-A1- 2017 313 324
- US-A1- 2020 356 100

## Description

### BACKGROUND

### Technical Field

The present invention relates to driving support functions of a vehicle.

### Description of the Related Art

In recent years, vehicles having driving support functions, such as cruise control and semi-automated driving, have become popular

In this regard, for example, Japanese Patent Application Laid-Open Publication No. 2021-094970 discloses an invention related to an in-vehicle device that proposes the use of driving support functions to a driver.

Document US 2020/356 100 A relates to generating an autonomy map for assisting an autonomous vehicle.

Document US 2017/313 324 A relates to a vehicle autonomated driving system.

### SUMMARY

The object of the present invention is to improve the convenience of a user who drives a vehicle.

The present invention in its one aspect provides an information processing apparatus configured to be mounted on a first vehicle, comprising a control unit comprising at least one processor configured to execute: obtaining, from the first vehicle, vehicle data relating to travel of the first vehicle; and identifying, based on the vehicle data, one or more first points, which are one or more points at which the first vehicle has satisfied operating conditions for a predetermined driving support function included in the first vehicle while the first vehicle is traveling; the control unit being configured to teach the one or more first points to a user associated with the first vehicle.

The present invention in its another aspect provides a vehicle system comprising an in-vehicle device mounted on a first vehicle and a server device, wherein the in-vehicle device has a first control unit configured to transmit vehicle data, which is data relating to travel of the first vehicle, to the server device; and the server device has a second control unit configured to identify, based on the vehicle data obtained from the in-vehicle device, one or more first points, which are one or more points at which the first vehicle has satisfied operating conditions for a predetermined driving support function while the first vehicle is traveling; the second control unit being configured to teach the one or more first points to a user associated with the first vehicle.

One aspect of the embodiment of the present invention is an information processing method including: a step of obtaining, from a first vehicle, vehicle data which is data relating to travel of the first vehicle; a step of identifying, based on the vehicle data, one or more first points which are one or more points at which the first vehicle has satisfied operating conditions for a predetermined driving support function included in the first vehicle while the first vehicle is traveling; and a step of teaching the one or more first points to a user associated with the first vehicle.

In addition, as a non claimed aspect, there is mentioned a program for causing a computer to perform the method, or a computer-readable storage medium storing the program in a non-transitory manner.

According to the present invention, it is possible to improve the convenience of a user who drives a vehicle.

### BRIEF DESCRIPTION OF THE DRAWINGS

FIG. 1 is a schematic diagram of a vehicle system according to a first embodiment;
FIG. 2 is a view for explaining component elements included in a vehicle according to the first embodiment;
FIG. 3 is a view for explaining operating conditions for driving support functions;
FIG. 4 is a view for explaining vehicle data transmitted from the vehicle;
FIG. 5 is a system configuration diagram of a server device;
FIG. 6 illustrates an example of a map for teaching a first point;
FIG. 7 illustrates another example of the map for teaching first points;
FIG. 8 is a system configuration diagram of a user terminal;
FIG. 9 is a flowchart of processing executed by an in-vehicle device;
FIG. 10 is a sequence diagram of processing between the server device and the user terminal;
FIG. 11 illustrates an example of a screen for selecting a driving support function;
FIG. 12 illustrates an example of a screen for outputting a route map;
FIG. 13 is a flowchart of processing executed by an in-vehicle device in a second embodiment;
FIG. 14 illustrates an example of vehicle data in the second embodiment; and
FIG. 15 is a flowchart of processing executed by an in-vehicle device in a third embodiment.

### DESCRIPTION OF THE EMBODIMENTS

In recent years, vehicles having driving support functions have become popular. As the driving support functions, there may be mentioned, for example, an adaptive cruise control function, a steering assist function, a function of appropriately distributing power according to road conditions, and a remote parking function.

These driving support functions are often made available when a host or subject vehicle has satisfied predetermined conditions. For example, in order to start semi-automated driving in a highway, it is necessary to satisfy a plurality of conditions such as (1) that the vehicle is traveling on a predetermined highway, (2) that the vehicle is traveling within a predetermined speed range, and (3) that the vehicle is not changing lanes. In the present invention, such conditions are referred to as operating conditions (for a driving support function).

There is a technology to notify a driver that a vehicle satisfies operating conditions for a driving support function. However, there are various driving support functions, and if a notification is made by using, as a trigger, only the fact that the conditions are satisfied, the notification is frequently issued, which may annoy the driver. On the other hand, if the frequency of the notification is reduced, a problem may arise that the driver cannot recognize the driving support function even though it is available.

An information processing apparatus according to the present invention solves such problems.

An information processing apparatus according to one aspect of the present invention is characterized by including a control unit configured to execute: obtaining, from a first vehicle, vehicle data which is data relating to travel of the first vehicle; and identifying, based on the vehicle data, one or more first points which are one or more points at which the first vehicle has satisfied operating conditions for a predetermined driving support function included in the first vehicle while the first vehicle is traveling.

The user is typically the driver of the first vehicle.

The predetermined driving support function is at least any of one or more driving support functions included in the first vehicle. The control unit obtains data (vehicle data) relating to the running (travel) of the first vehicle from the first vehicle. The vehicle data is for identifying points (referred to as first points) at which the operating conditions for a predetermined driving support function included in the first vehicle are satisfied.

In cases where the information processing apparatus is a server device, the control unit may receive the vehicle data transmitted from the first vehicle. Also, in cases where the information processing apparatus is mounted on the first vehicle, the control unit may receive such information from the vehicle platform of the subject vehicle.

Further, the control unit identifies, based on the vehicle data, a point at which the operating conditions for the predetermined driving support function were satisfied (in other words, a point at which the predetermined driving support function was available). The point obtained as a result of the identification may be taught to the user. According to such a configuration, it becomes possible to notify the user that the predetermined driving support function was available after the fact.

The control unit may generate a map in which the one or more first points are mapped to a travel route of the first vehicle in the past. According to such a configuration, it is possible to visually inform the user at what points the driving support function was available.

Here, note that the control unit does not necessarily have to teach all the first points to the user. For example, in cases where the user has received a notification that the operating conditions for the driving support function are satisfied while the vehicle is traveling, or in cases where there is a history of using the driving support function at a corresponding point, the point may be excluded from teaching.

Hereinafter, specific embodiments of the present invention will be described based on the accompanying drawings. The hardware configuration, module configuration, functional configuration, and the like described in each embodiment are not intended to limit the technical scope of the invention only to them unless otherwise specified.

### (First Embodiment)

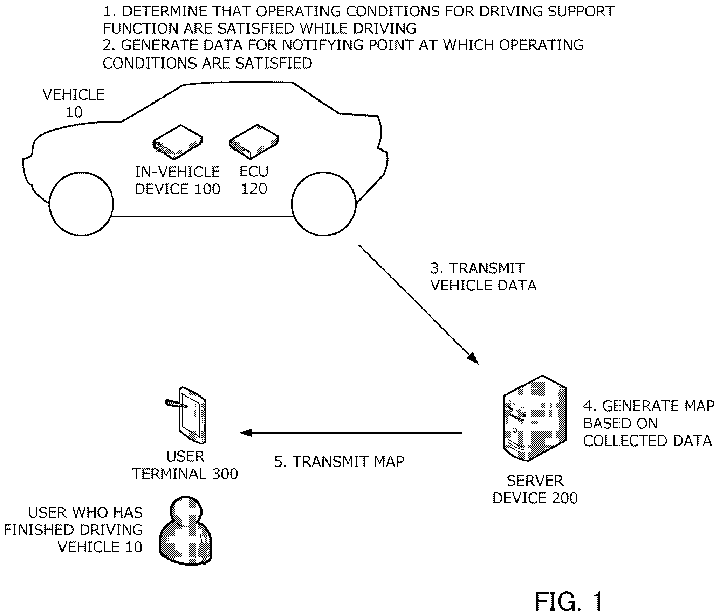

An outline of a vehicle system according to a first embodiment will be described with reference to FIG. 1. A vehicle system of the first embodiment includes a vehicle 10, a server device 200, and a user terminal 300. A plurality of vehicles 10 and user terminals 300 may be included in the vehicle system.

The vehicle 10 is capable of providing a plurality of driving support functions. The plurality of driving support functions each become available under predetermined conditions.

The vehicle 10 determines whether or not operating conditions for each of the plurality of driving support functions have been satisfied while the vehicle 10 is traveling. Also, the vehicle 10 generates data for notifying a combination of driving support functions and their points for and at which their operating conditions have been satisfied, and transmits it to the server device 200.

In addition, the server device 200 generates, based on the data received from the vehicle 10, a map for teaching "which driving support functions were available at which points", and transmits the map to the user terminal 300.

Thus, the driver of the vehicle 10 can recognize that there were available driving support functions after the fact.

Each element constituting the system will be explained.

The vehicle 10 is a connected car having a function of communicating with an external network. The vehicle 10 is configured to include an in-vehicle device 100 and an electronic control unit 120 (also referred to as an ECU). Note that a single ECU is illustrated in FIG. 1, but the vehicle 10 may include a plurality of ECUs.

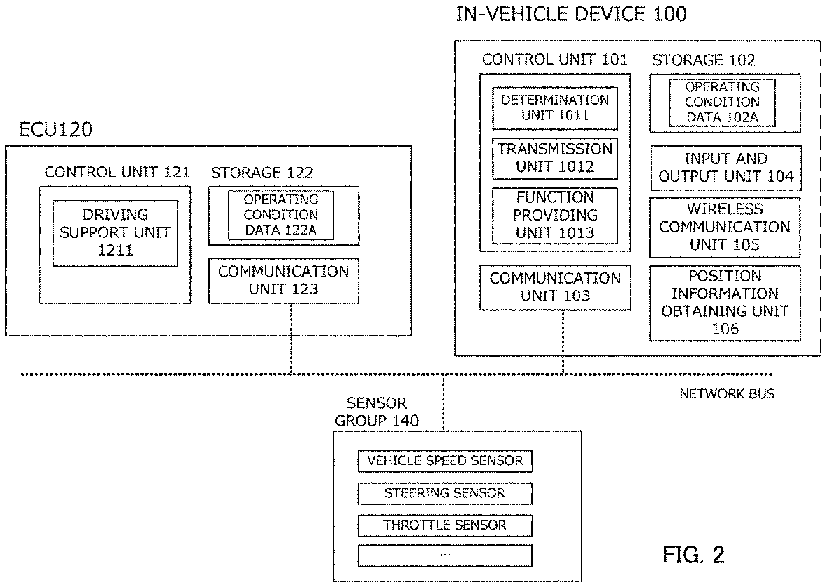

FIG. 2 is a view for explaining component elements included in the vehicle 10 according to the present embodiment. The vehicle 10 according to the present embodiment is configured to include an in-vehicle device 100, a plurality of ECUs 120, and a sensor group 140.

Although a single ECU is illustrated in this example, the vehicle 10 may include a plurality of ECUs that manage different vehicle components. As the plurality of ECUs, there can be mentioned, for example, a body ECU, an engine ECU, a hybrid ECU, a powertrain ECU and the like. Also, the ECU may be divided on a functional basis. For example, it may be divided into an ECU that performs a security function, an ECU that performs an automatic parking function, and an ECU that performs a remote control function.

First, the in-vehicle device 100 will be described.

The in-vehicle device 100 is a device that provides information to an occupant of the vehicle (e.g., a car navigation device). The in-vehicle device 100 is also referred to as a car navigation device, an infotainment device, or a head unit. With the in-vehicle device 100, it is possible to provide navigation and entertainment to the occupant of the vehicle.

The in-vehicle device 100 has a function of performing wireless communication with the external network. The in-vehicle device 100 may have a function of downloading traffic information, road map information, music, moving images, etc., by communicating with the external network of the vehicle 10. In addition, in-vehicle device 100 may be a device capable of cooperating with a smartphone or the like.

The in-vehicle device 100 can be constituted by a computer having a processor such as a CPU, a GPU or the like, a main storage device such as a RAM, a ROM or the like, and an auxiliary storage device such as an EPROM, a hard disk drive, a removable medium or the like. An operating system (OS), various programs, various tables, and the like are stored in the auxiliary storage device, and by executing the programs stored therein, it is possible to realize each function that meets a predetermined purpose, as described later. However, some or all of the functions may be implemented by a hardware circuit such as an ASIC or an FPGA.

The in-vehicle device 100 is configured to include a control unit 101, a storage 102, a communication unit 103, an input and output unit 104, a wireless communication unit 105, and a position information obtaining unit 106.

The control unit 101 is an arithmetic unit that realizes the various functions of the in-vehicle device 100 by executing a predetermined program. The control unit 101 may be implemented by a CPU or the like, for example.

The control unit 101 is configured to include three functional modules: a determination unit 1011, a transmission unit 1012, and a function providing unit 1013. Each functional module may be implemented by executing a stored program by the CPU.

The determination unit 1011 determines whether or not the operating conditions for each a plurality of driving support functions provided by the ECU 120 are established. The determination unit 1011 obtains control data for controlling the vehicle 10 and sensor data generated by sensors mounted on the vehicle via a bus of an in-vehicle network to be described later, for example, and determines whether or not the operating conditions are established.

Note that when the operating conditions for a predetermined driving support function are established, the determination unit 1011 may notify the driver to that effect. A notification can be made, for example, through an indicator lamp or a display provided in the driver's seat.

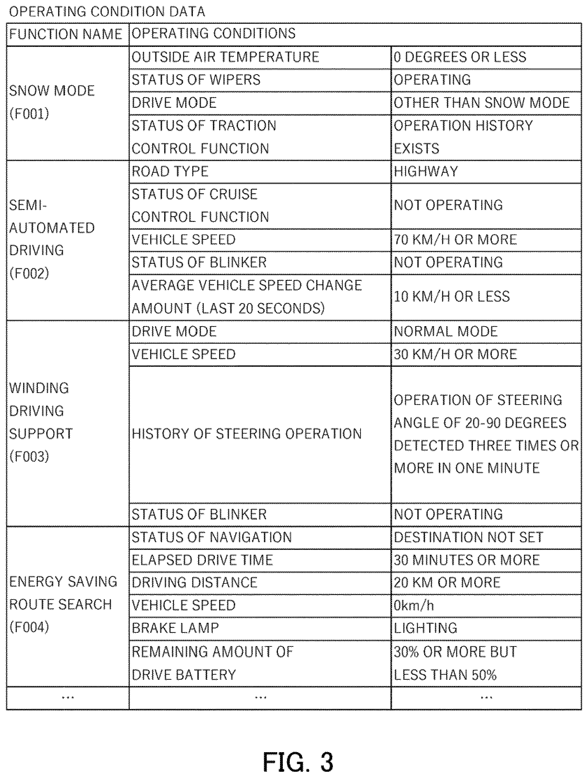

Here, operating conditions for driving support functions will be described. FIG. 3 is a table illustrating a plurality of driving support functions and their operating conditions. For example, in the illustrated example, the use of a driving support function "snow mode" becomes available when the following conditions are satisfied.
(1) The outside air temperature is 0 degrees or less.
(2) Wipers are operating.
(3) The current driving mode is other than snow mode.
(4) There is a history of the intervention of control by a traction control function.

A list of such operating conditions is held as operating condition data by both the ECU 120 and the in-vehicle device 100.

The in-vehicle device 100 (i.e., the determination unit 1011) compares such data with sensor data and the like obtained via the in-vehicle network to determine that the operating conditions for a driving support function have been established. The result of the determination is sent to the transmission unit 1012.

Transmission unit 1012 generates data relating to the state of vehicle 10 (hereinafter, referred to as vehicle data), and periodically transmits the data to server device 200. The vehicle data includes data relating to the travel of the vehicle and the result of determinations made by the determination unit 1011.

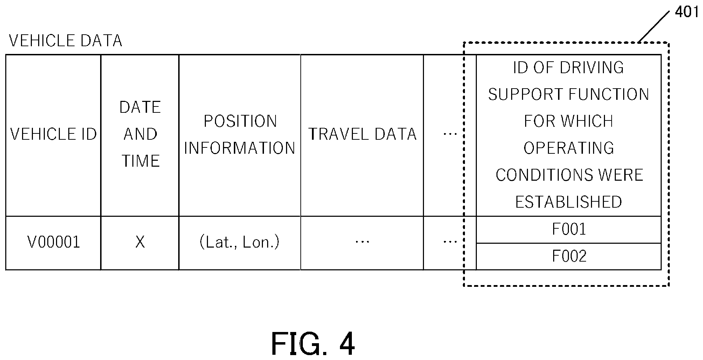

The vehicle data will be explained in detail. FIG. 4 illustrates an example of the vehicle data generated by the transmission unit 1012.

A vehicle ID is an identifier for uniquely identifying a target vehicle 10.

Position information is information that indicates the position (latitude, longitude) of a point at which the vehicle data was generated.

Travel data is data relating to the travel of the vehicle 10. As the travel data, there can be mentioned, for example, the speed of the vehicle 10, the direction of travel, information on driving operation (e.g., a throttle opening, a steering operation amount, etc.), and the like. Such data can be obtained based on control data and sensor data flowing through the in-vehicle network.

Reference numeral 401 denotes a field in which the result of the determination performed by the determination unit 1011 is stored. In this field, an identifier of each driving support function for which its operating conditions are established is stored. In the illustrated example, it is shown that at the timing of X, the operating conditions for driving support functions having identifiers of F001 and F002, respectively, were satisfied. Hereinafter, a point at which the operating conditions for a driving support function were satisfied is referred to as a first point.

In cases where the operating conditions for any of the driving support functions are satisfied at the timing of generating the vehicle data, the transmission unit 1012 stores the identifier of the corresponding driving support function in a predetermined field (reference numeral 401) in the vehicle data. In cases where the operating conditions for a plurality of driving support functions are established, a plurality of identifiers are stored in this field. Note, however, that in cases where the operating conditions for any driving support function are not established, no data is stored in this field.

Here, note that the vehicle data may include other data relating to the travel of the vehicle 10. As such data, there can be mentioned, for example, the speed of the vehicle 10, the direction of travel, information on driving operation (e.g., a throttle opening, a steering operation amount, etc.), and the like.

The vehicle data can be obtained based on control data and sensor data flowing through the in-vehicle network.

The function providing unit 1013 performs various functions provided by the in-vehicle device 100. The functions provided by the in-vehicle device 100 include the following, for example.

### • Terminal Link Function

This is a function to connect the in-vehicle device 100 to a terminal (e.g., smartphone, etc.) owned or carried by an occupant of the vehicle to play music and moving images, mirror a screen, etc.

### • Audio Function

This is a function to reproduce music or songs stored in the storage device.

### • TV / Radio Function

This is a function to receive radio broadcasting and digital television broadcasting.

### • Navigation Function

This is a function to provide route navigation based on map data stored in the storage device.

These functions can be provided, for example, through the input and output unit 104 (touch panel).

The storage 102 is a unit for storing information, and is constituted by a storage medium such as a RAM, a magnetic disk, a flash memory or the like. The storage 102 stores various programs to be executed by the control unit 101, data to be used by the programs, etc. In addition, the storage 102 stores the above-described operating condition data (102A).

The communication unit 103 is a communication interface for connecting the in-vehicle device 100 to a bus of the in-vehicle network.

The input and output unit 104 is a unit that receives an input operation performed by a user and presents information to the user. Specifically, it is composed of a touch panel with its control unit, and a liquid crystal display with its control unit. The touch panel and the liquid crystal display are composed of one touch panel display in the present embodiment. The input and output unit 104 may include a unit configured to output sound (e.g., an amplifier and a speaker), a unit configured to input sound (a microphone), and the like.

The wireless communication unit 105 includes an antenna and a communication module for performing wireless communication. The antenna is an antenna element for inputting and outputting radio or wireless signals. In the present embodiment, the antenna is compatible with mobile communication (e.g., mobile communication such as 3G, LTE, 5G, etc.). Note, that the antenna may be configured to include a plurality of physical antennas. For example, when mobile communication using radio waves in a high frequency band such as a microwave or a millimeter wave is performed, a plurality of antennas may be arranged in a distributed manner in order to stabilize the communication. The communication module is a module for performing mobile communication.

The position information obtaining unit 106 includes a GPS (Global Positioning System) antenna and a positioning module for measuring position information. The GPS antenna is an antenna that receives positioning signals transmitted from positioning satellites (also referred to as GNSS satellites). The positioning module is a module that calculates the position information based on the signals received by the GPS antenna.

Next, the ECU included in the vehicle 10 will be described.

The ECU is an electronic control unit that controls components included in the vehicle 10. The vehicle 10 may include a plurality of ECUs. The plurality of ECUs control components of mutually different systems such as an engine system, an electrical system, a power train system, etc. The ECUs each have a function to generate a prescribed message and to periodically transmit and receive the message via the in-vehicle network. The ECU 120 is one of the plurality of ECUs.

The ECU 120 is an electronic control unit that provides a plurality of driving support functions. The ECU 120 provides the driving support functions based on the instructions of the driver. In cases where the driving support functions serve to support the driving operation of the vehicle, the ECU 120 may transmit a steering control command, a throttle control command, a power distribution command, or the like to another ECU that controls the vehicle. Each of the plurality of driving support functions can be provided when predetermined conditions are satisfied.

Similarly to the in-vehicle device 100, the ECU 120 can be configured as a computer having a processor such as a CPU, a GPU or the like, a main storage device such as a RAM, ROM or the like, and an auxiliary storage device such as an EPROM, a disk drive, a removable medium or the like.

The ECU 120 is configured to include a control unit 121, a storage 122, and a communication unit 123.

The control unit 121 is an arithmetic unit that realizes the various functions of the ECU 120 by executing a predetermined program. The control unit 121 may be implemented by a CPU or the like, for example.

The control unit 121 is configured to include a driving support unit 1211 as a functional module. The functional module may be realized by executing a stored program by the CPU.

The driving support unit 1211 provides the driving support functions to the driver of the vehicle 10.

The driving support functions are provided based on the instructions of the driver. For example, when an operation for activating a predetermined driving support function is performed via a hardware switch, a touch panel, or the like, the driving support unit 1211 determines whether or not operating conditions for this driving support function are established. In addition, when the operating conditions are established, the driving support unit 1211 starts providing the driving support function. Here, note that in cases where the operating conditions for the predetermined driving support function are not established, the operation itself for making the predetermined driving support function valid may be disabled. For example, a menu displayed on the touch panel display may be hidden.

The driving support unit 1211 provides a driving support function by transmitting, for example, a steering control command, a throttle control command, a power distribution command and the like to another ECU for controlling the vehicle.

Here, note that the driving support functions in the present embodiment assist the driving operation of the driver, but the driving support functions do not necessarily have to assist the driving operation. For example, a driving support function may be provided by the in-vehicle device 100. For example, it is possible to provide a function that does not intervene in the driving operation, such as searching for and proposing a route with less electricity consumption when the remaining amount or power of the drive battery is low.

The storage 122 is a unit for storing information, and is constituted by a storage medium such as a RAM, a magnetic disk, a flash memory or the like. The storage 122 stores various programs to be executed by the control unit 121, data to be used by the programs, etc. In addition, the storage 122 stores operating condition data 122A similar to that stored in the in-vehicle device 100.

The communication unit 123 is a communication interface for connecting the ECU 120 to a bus of the in-vehicle network.

The sensor group 140 is a set of a plurality of sensors included in the vehicle 10. In the present embodiment, the in-vehicle device 100 (or the ECU 120) uses sensor data obtained by the sensors included in the sensor group 140 in order to determine whether or not the operating conditions for the predetermined driving support function are established.

The sensor group 140 includes sensors that obtain sensor data relating to the driving operation, such as, for example, a vehicle speed sensor for obtaining a vehicle speed, a steering sensor for obtaining a steering operation angle, and a throttle sensor for obtaining a throttle opening.

Note that the sensor group 140 may include sensors that obtain operations other than driving. As such a sensor, there can be mentioned, for example, a sensor for obtaining an operating status of a wiper or a winker (direction indicator).

In addition, sensors for obtaining other elements may be included in the sensor group 140. For example, the sensor group 140 may include a temperature sensor and a rainfall sensor. The sensor data obtained by each sensor is transmitted to the ECU 120 or the in-vehicle device 100 via a network bus.

The network bus is a communication bus that constitutes the in-vehicle network. Although one bus is illustrated in this example, the vehicle 10 may have two or more communication buses. A plurality of communication buses may be connected to each other by a gateway that organizes the plurality of communication buses.

Next, the server device 200 will be described.

The server device 200 collects the vehicle data from the vehicle 10 (i.e., the in-vehicle device 100), and provides information on the past travel of the vehicle 10 to the user terminal 300 based on the vehicle data thus collected. Specifically, the server device 200 generates a map for teaching a point at which a predetermined driving support function was available in the past travel of the vehicle 10, and provides the map to the user terminal 300.

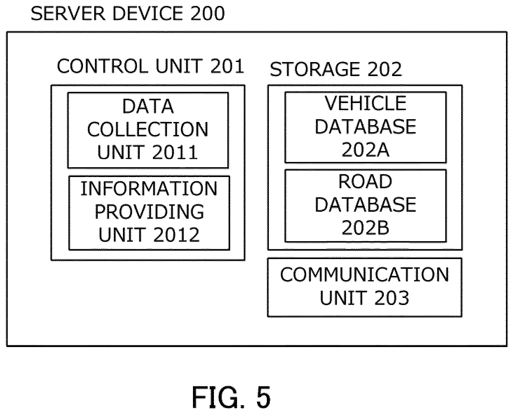

FIG. 5 is a diagram illustrating in detail the component elements of the server device 200 included in the vehicle system according to the present embodiment.

The server device 200 can be constituted by a computer having a processor such as a CPU, a GPU or the like, a main storage device such as a RAM, a ROM or the like, and an auxiliary storage device such as an EPROM, a hard disk drive, a removable medium or the like. An operating system (OS), various programs, various tables and the like are stored in the auxiliary storage device, so that the programs stored therein are executed by being loaded into a work area of the main storage device, and the component parts and the like are controlled through the execution of the programs, whereby each function meeting a predetermined purpose as described later can be realized. However, some or all of the functions may be implemented by a hardware circuit such as an ASIC or an FPGA.

The server device 200 is configured to include a control unit 201, a storage 202, and a communication unit 203.

The control unit 201 is an arithmetic unit that manages the control performed by the server device 200. The control unit 201 can be implemented by an arithmetic processing unit such as a CPU or the like.

The control unit 201 is configured to include a data collection unit 2011 and an information providing unit 2012 as functional modules. Each functional module may be implemented by executing a stored program by the CPU.

The data collection unit 2011 performs processing of collecting vehicle data from a plurality of vehicles 10 (i.e., in-vehicle devices 100), and storing the data thus collected in a database.

The information providing unit 2012 generates information for supporting the use of a driving support function based on a request from the user terminal 300, and provides the information to the user terminal 300. To be more specific, the information providing unit 2012 generates, for a predetermined driving support function, a map for teaching a point at which the driving support function was available (i.e., a point at which the operating conditions for the driving support function were satisfied), and provides the map to the user terminal 300.

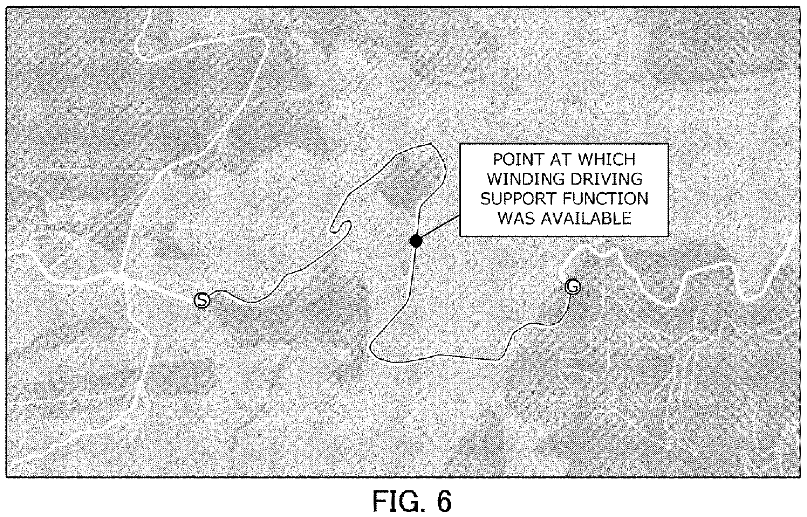

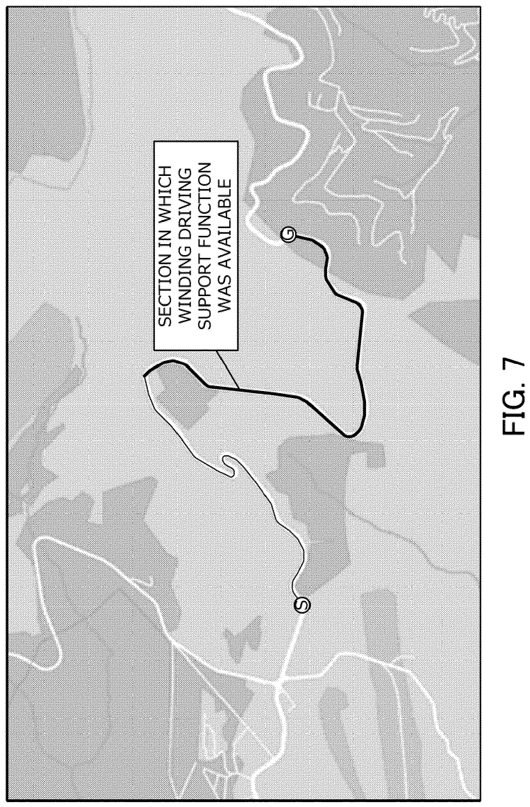

FIG. 6 illustrates an example of a map representing a travel route of the vehicle 10 (hereinafter, referred to as a route map). The information providing unit 2012 refers to the vehicle data of the corresponding vehicle 10, and generates an image by mapping (superimposing) a point (i.e., a first point) where the operating conditions for the driving support function were satisfied on the route map. Here, note that, when the operating conditions for the driving support function continued to be satisfied during the travel of the vehicle 10, the corresponding road section may be mapped on the route map, as illustrated in FIG. 7.

In addition, the information providing unit 2012 may superimpose, on the route map, text or the like explaining what kind of driving support function was available at the corresponding point or road section.

The storage 202 is configured to include a main storage device and an auxiliary storage device. The main storage device is a memory in which control programs to be executed by the control unit 201 and data to be used by the control programs are developed. The auxiliary storage device stores the control programs to be executed in the control unit 201 and data to be used by the control programs.

In addition, the storage 202 stores a vehicle database 202A and a road database 202B.

The vehicle database 202A is a database that stores vehicle data transmitted from a plurality of in-vehicle devices 100 under the management of the system. The vehicle database 202A stores a plurality of vehicle data described with reference to FIG. 4.

The road database 202B is a database that stores road map data. The data stored in the road database 202B are used when the information providing unit 2012 generates the route map.

The communication unit 203 is a communication interface for connecting the server device 200 to a network. The communication unit 203 is configured to include, for example, a network interface board and a wireless communication interface for wireless communication.

Now, the user terminal 300 will be described.

The user terminal 300 is a computer owned by a user associated with the vehicle 10 (typically, a driver of the vehicle 10).

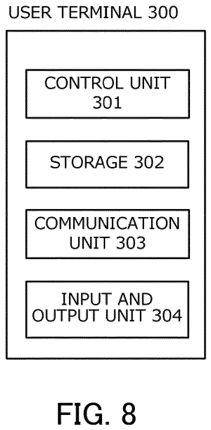

FIG. 8 illustrates the component elements of the user terminal 300 in more detail.

The user terminal 300 is configured to include a control unit 301, a storage 302, a communication unit 303, and an input and output unit 304.

The control unit 301 is an arithmetic unit that manages the control performed by the user terminal 300. The control unit 301 can be realized by an arithmetic processing device such as a CPU (Central Processing Unit).

The control unit 301 performs a function of accessing the server device 200 and interacting with the server device 200. This function may be implemented by dedicated application software that runs on the user terminal 300. The control unit 301 performs processing of requesting a route map corresponding to a given vehicle 10 from the server device 200 and processing of outputting the route map received from the server device 200.

The storage 302 is configured to include a main storage device and an auxiliary storage device. The main storage device is a memory in which control programs to be executed by the control unit 301 and data to be used by the control programs are developed. The auxiliary storage device stores the control programs to be executed in the control unit 301 and data to be used by the control programs. The auxiliary storage device may store programs which are packaged as applications to be executed by the control unit 301. In addition, the auxiliary storage device may also store an operating system for executing these applications. When a program stored in the auxiliary storage device is loaded into the main storage device and executed by the control unit 301, the processing described below is performed.

The communication unit 303 is a wireless communication interface for connecting the user terminal 300 to a network. The communication unit 303 is configured to be able to communicate with the server device 200 via a wireless LAN or a mobile communication service such as 3G, LTE, 5G or the like.

The input and output unit 304 is a unit that receives an input operation performed by the user and presents information to the user. The input and output unit 304 is composed of, for example, one touch panel display. The input and output unit 304 may be composed of a liquid crystal display and its control means, or a touch panel and its control means.

Here, note that the configurations illustrated in FIGS. 2, 5 and 8 are merely examples, and all or part of the functions thus illustrated may be executed by using a circuit designed for exclusive use. In addition, the programs may be stored or executed by a combination of a main storage device and an auxiliary storage device other than those illustrated in the figure.

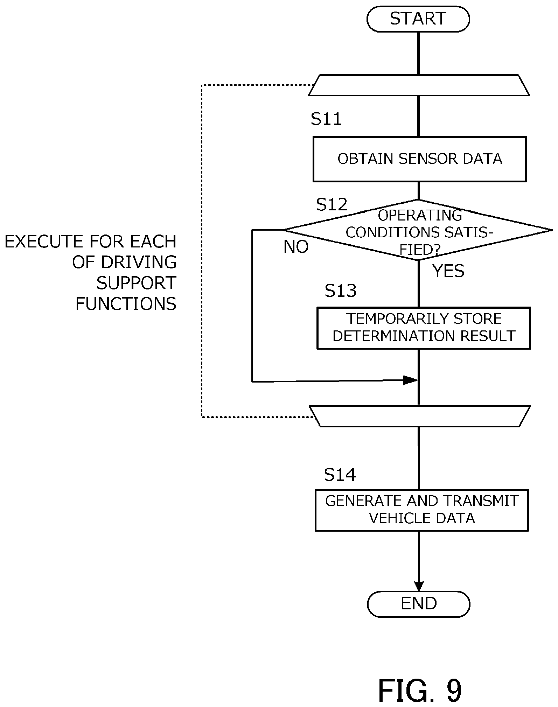

Next, a method for generating the vehicle data by means of the in-vehicle device 100 will be described. FIG. 9 is a flowchart of the method to be performed by the in-vehicle device 100. The processing illustrated is repeatedly executed at a predetermined cycle while the vehicle 10 is traveling.

The processing from steps S11 to S13 is individually executed for each of the plurality of driving support functions included in the vehicle 10.

First, in step S11, the determination unit 1011 obtains sensor data.

For example, in the case of the example illustrated in FIG. 3, the vehicle speed, the outside air temperature, the state of wipers or winkers, drive mode, the operating status of a traction control function or a cruise control function, the history of steering operation, etc., are to be obtained. The sensor data can be obtained from sensors included in the sensor group 140 or from a plurality of ECUs provided in the vehicle 10.

In step S12, the determination unit 1011 determines whether or not the operating conditions are satisfied with respect to a target driving support function. The determination can be made based on the sensor data and the operating condition data 102A.

In step S13, the result of the determination performed in step S12 is temporarily stored. In this step, the identifier of a driving support function for which its operating conditions are satisfied, position information, date and time information, and the like are temporarily stored.

The determination unit 1011 executes the processing described above for all of the plurality of driving support functions included in the vehicle 10.

In step S14, based on the temporarily stored determination result, the transmission unit 1012 generates vehicle data and transmits it to the server device 200. As illustrated in FIG. 4, the vehicle data is composed of a plurality of fields.

The processing illustrated in FIG. 9 is repeatedly executed until the vehicle 10 finishes traveling (e.g., until the ignition is turned off). That is, during a period in which the vehicle 10 is traveling, the vehicle data is periodically generated and sequentially transmitted to the server device 200.

The vehicle data is received by the server device 200 (i.e., the data collection unit 2011) and stored in the vehicle database 202A.

Here, note that, before starting the processing illustrated in FIG. 9, the in-vehicle device 100 may execute processing (i.e., initialization processing) of obtaining information on the user and the vehicle from the server device 200.

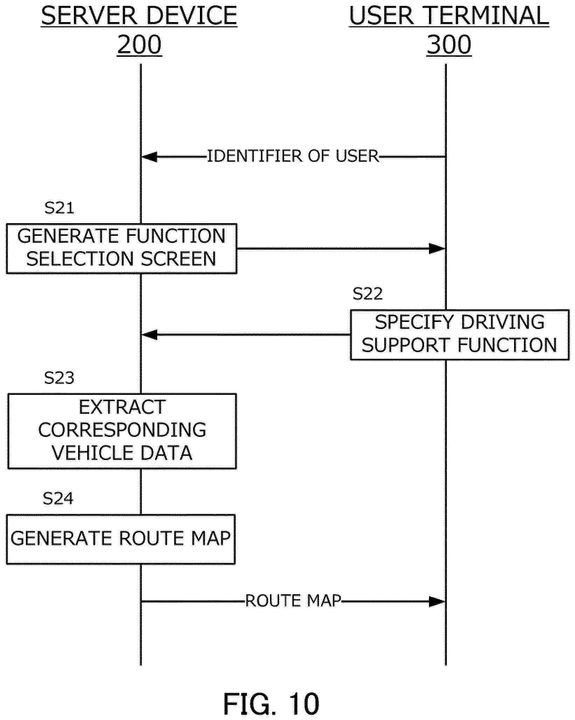

Next, processing in which the user terminal 300 accesses the server device 200 to request a route map will be described. FIG. 10 is a sequence diagram of processing to be executed by the server device 200 and the user terminal 300. The processing is started at the timing when the user terminal 300 (i.e., the control unit 301) activates application software for accessing the server device 200.

First, the control unit 301 transmits an identifier of the user to the server device 200. The identifier of the user may have been stored in the storage 302 in advance. In this step, the server device 200 specifies an identifier of the target vehicle 10 based on the identifier of the user received from the user terminal 300.

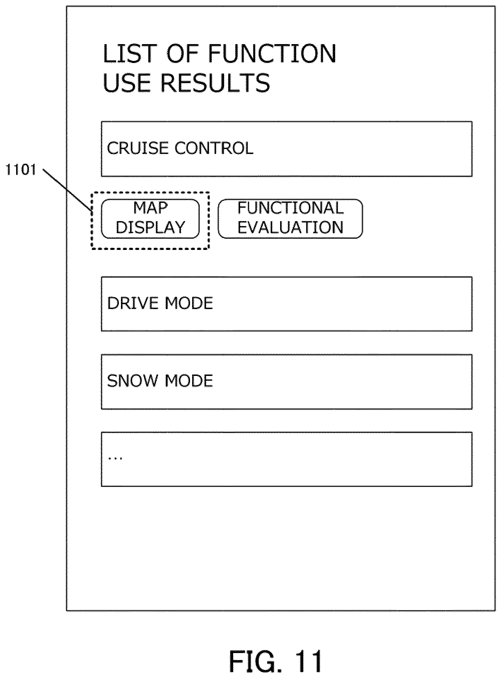

In step S21, the information providing unit 2012 generates a function selection screen. The function selection screen is a screen for selecting any of a plurality of driving support functions available for the vehicle 10. The driving support functions available for the vehicle 10 may be obtained based on the vehicle database 202A. FIG. 11 illustrates an example of the function selection screen. The function selection screen is transmitted to the user terminal 300.

In step S22, the control unit 301 outputs the function selection screen and accepts a selection from the user. When the user taps any of the buttons (e.g., a reference numeral 1101), a driving support function thus selected is notified to the server device 200.

In step S23, based on the identifier of the vehicle 10 and the driving support function designated by the user, the information providing unit 2012 extracts a record of the corresponding vehicle data from the vehicle database 202A.

Then, in step S24, the information providing unit 2012 generates a user interface screen for presenting a route map to the user. In addition, the information providing unit 2012 generates a graphic for teaching the user about a point or a section where the operating conditions for the driving support function were satisfied, and superimposes the graphic on the route map. The graphic may be an icon, a figure, or the like.

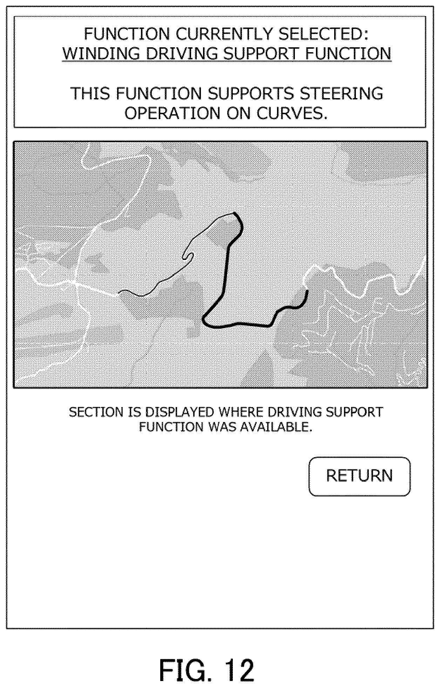

Based on the vehicle data extracted in step S23, the information providing unit 2012 determines the point (or road section) at which the operating conditions for the designated driving support function were satisfied, and superimposes the graphic representing the point (or road section) on the route map. FIG. 12 is an example of an image in which a graphic showing a section in which the operating conditions for the designated driving support function were satisfied is superimposed on the route map.

As described above, the vehicle system according to the present embodiment periodically determines whether or not each of a plurality of vehicles 10 has satisfied the operating conditions for a predetermined driving support function, and notifies the result of the determination together with the position information thereof to the server device 200. In addition, based on the information collected from a vehicle 10, the server device 200 informs a user of the points at which the operating conditions for the driving support function were satisfied. As a result, it becomes possible for the user to grasp the points at which the operating conditions for each driving support function were satisfied after the fact.

### (Second Embodiment)

In the first embodiment, all the points at which the operating conditions for a driving support function were satisfied are notified to the user after the fact. On the other hand, it is conceivable that the in-vehicle device 100 notifies in real time that the operating conditions for a driving support function are satisfied, while the vehicle is traveling. In such a form, it is not necessary to reissue similar notifications that have already been made.

Thus, in a second embodiment, whether or not the user has been notified while driving is recorded, and based on this, the server device 200 determines whether or not to make an ex-post notification for each point.

In the second embodiment, when the operating conditions for a driving support function have been satisfied while the vehicle 10 is traveling, the in-vehicle device 100 notifies the user (i.e., the driver) in real time under a certain condition. In addition, an ex-post notification is omitted for a point at which a notification was made during the travel of the vehicle.

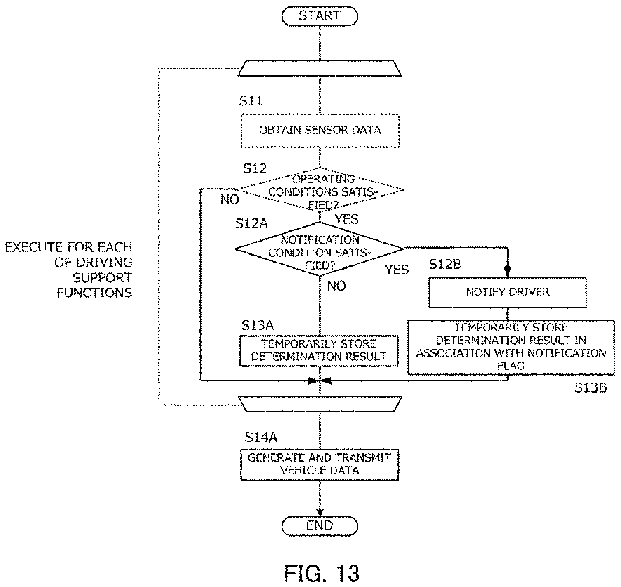

FIG. 13 is a flowchart of processing to be executed by the in-vehicle device 100 in the second embodiment. Note that the same processing as in the first embodiment is indicated by a dotted line, and a detailed description thereof is omitted.

In the second embodiment, when the determination is affirmative in step S12, the determination unit 1011 determines whether or not the notification condition is satisfied (step S12A). The notification condition is a condition for notifying the driver that a driving support function is available while the vehicle is traveling. For example, if a notification is made while the winkers are operating or when the inter-vehicle distance between the subject vehicle and the preceding vehicle is not sufficient, the attention of the driver may be distracted. In this step, it is determined whether or not the vehicle 10 is in such a situation. Note that data relating to the notification condition may have been stored in the storage 102.

When the notification condition is not satisfied, the processing proceeds to step S13A, where the determination unit 1011 temporarily stores the determination result.

When the notification condition is satisfied, the processing proceeds to step S12B, where the determination unit 1011 outputs, via the input and output unit 104, a notification to the effect that the corresponding driving support function can be used. When the notification is output, then in step S13B, the determination result is temporarily stored in association with a notification flag. The notification flag is a flag indicating the presence or absence of a notification during travel.

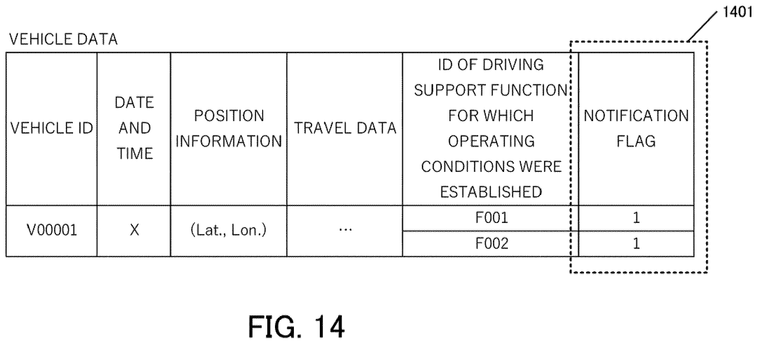

In the second embodiment, the notification flag is added to the vehicle data. FIG. 14 illustrates an example of the vehicle data in the second embodiment. When the notification flag (i.e., reference numeral 1401) is "1", it means that the notification of the corresponding driving support function has been made while the vehicle is traveling. In step S14A, the transmission unit 1012 generates vehicle data including such a flag.

In addition, in the second embodiment, in step S24, the server device 200 (i.e., the information providing unit 2012) performs mapping to the route map only for a point(s) (or a road section(s)) at which the notification has not been made while the vehicle is traveling. In other words, the mapping is omitted for the first point at which the notification flag is set.

According to such a configuration, it is possible to prevent duplicate notifications from being made during and after travel.

Here, note that in the above description, it is assumed that a notification is not made in the vehicle when the notification condition is not satisfied, but in such a case, a notification may be temporarily suspended so that it may be output at the timing when the notification condition is satisfied (e.g., at the timing when a lane change is completed).

### (Third Embodiment)

In a third embodiment, whether or not a user has used a driving support function while the vehicle is traveling is recorded, and an ex-post notification of a point at which the driving support function has been used is omitted.

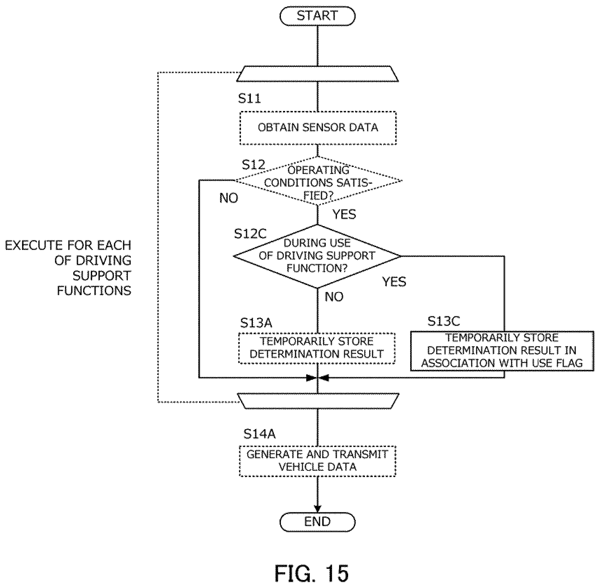

FIG. 15 is a flowchart of processing to be executed by the in-vehicle device 100 in the third embodiment. Note that the same processing as in the first embodiment is indicated by a dotted line, and a detailed description thereof is omitted.

In the third embodiment, when the determination is affirmative in step S12, the determination unit 1011 determines whether or not the corresponding driving support function is currently being used (step S12C).

When the corresponding driving support function is not being used, the processing proceeds to step S13A, where the determination unit 1011 temporarily stores the determination result.

On the other hand, when the corresponding driving support function is being used, the processing proceeds to step S13C, where the determination unit 1011 temporarily stores the determination result in association with a use flag. The use flag is a flag indicating whether or not the corresponding driving support function has been used while the vehicle is traveling.

In the third embodiment, the notification flag (i.e., reference numeral 1401) in the second embodiment is replaced by the use flag. When the use flag is set, it means that the corresponding driving support function has been used at the corresponding point.

In addition, in the third embodiment, in step S24, the server device 200 (i.e., the information providing unit 2012) performs mapping to the route map only for the driving support functions that were not used during the travel of the vehicle. In other words, the mapping is omitted for the first point at which the use flag is set.

According to such a configuration, even though the driving support function has been used at a predetermined point, it is possible to prevent a notification to the same point from being made.

(deleted)

In addition, in the description of the embodiments, examples have been mentioned in which the in-vehicle device 100 generates vehicle data and transmits it to the server device 200, but the role of the server device 200 may be given to the in-vehicle device 100. In this case, the in-vehicle device 100 may generate a route map and transmit it to the user terminal 300.

Here, note that in the above embodiments, examples have been shown in which the server device 200 teaches a user a point or section where the operating conditions were satisfied for a driving support function designated by the user, but a point or section where ex-post teaching is not needed may be omitted. For example, in cases where the driver is familiar with how to use a certain driving support function and does not need to be taught, the driving support function can be excluded from teaching. The storage 202 may store data that associates the user with the driving support functions to be taught (or to be excluded from teaching).

(deleted)

In addition, the processing described as being performed by one device may be shared and executed by a plurality of devices. Alternatively, the processing described as being performed by different devices may be executed by one device. In a computer system, what hardware configuration (server configuration) realizes each function can be flexibly changed.

Disclosed, but not claimed is a computer program including the functions described in the above embodiments to a computer and causing one or more processors included in the computer to read and execute the program. Such a computer program may be provided to the computer by a non-transitory computer-readable storage medium connectable to a system bus of the computer, or may be provided to the computer via a network. Examples of non-transitory computer readable storage media include: any type of disk such as a magnetic disk (floppy (registered trademark) disk, hard disk drive (HDD), etc.), an optical disk (CD-ROM, DVD disk, Blu-ray disk, etc.); and any type of medium suitable for storing electronic instructions, such as read-only memory (ROM), random access memory (RAM), EPROM, EEPROM, magnetic cards, flash memory, and optical cards.

## Claims

1. An information processing apparatus (200) configured to be mounted on a first vehicle (10), comprising a control unit (201) comprising at least one processor configured to execute:
obtaining, from the first vehicle (10), vehicle data relating to travel of the first vehicle (10); and
identifying, based on the vehicle data, one or more first points, which are one or more points at which the first vehicle (10) has satisfied operating conditions for a predetermined driving support function included in the first vehicle (10) while the first vehicle (10) is traveling;
the information processing apparatus (200) being **characterized in that** the control unit (201) is configured to teach the one or more first points to a user associated with the first vehicle (10).

2. The information processing apparatus (200) according to claim 2, wherein
the control unit (201) is configured to generate a map in which the one or more first points are mapped to a past travel route of the first vehicle (10).

3. The information processing apparatus (200) according to claim 2, wherein
the vehicle data indicates status of satisfying the operating conditions for the driving support function for each point.

4. The information processing apparatus (200) according to claim 2, wherein
the control unit (201) is configured to extract a second point satisfying a predetermined condition from the one or more first points, and to set the second point as a target for mapping.

5. The information processing apparatus (200) according to claim 4, wherein
the first vehicle (10) is a vehicle capable of notifying the user that the operating conditions for the driving support function have been satisfied while the vehicle is traveling; and
the second point is a point at which the notification has not been given to the user while the first vehicle (10) is traveling, and optionally wherein
the vehicle data indicates presence or absence of the notification for each point.

6. The information processing apparatus (200) according to claim 4, wherein
the second point is a point at which a corresponding driving support function has not been used when the first vehicle (10) is traveling, and optionally wherein
the vehicle data indicates status of using the driving support function for each point.

7. A vehicle system comprising an in-vehicle device (100) configured to be mounted on a first vehicle (10) and a server device (200), wherein
the in-vehicle device (100) has a first control unit (101) configured to transmit vehicle data, which is data relating to travel of the first vehicle (10), to the server device (200); and
the server device (200) has a second control unit (201) configured to identify, based on the vehicle data obtained from the in-vehicle device (100), one or more first points, which are one or more points at which the first vehicle (10) has satisfied operating conditions for a predetermined driving support function while the first vehicle (10) is traveling;
the vehicle system being **characterized in that** the second control unit (201) is configured to teach the one or more first points to a user associated with the first vehicle (10).

8. The vehicle system according to claim 7,
wherein
the second control unit (201) is configured to generate a map in which the one or more first points are mapped to a past travel route of the first vehicle (10).

9. The vehicle system according to claim 8,
wherein
the vehicle data indicates status of satisfying the operating conditions for the driving support function for each point.

10. The vehicle system according to claim 8,
wherein
the second control unit (201) is configured to extract a second point satisfying a predetermined condition from the one or more first points, and to set the second point as a target for mapping.

11. The vehicle system according to claim 10,
wherein
the first vehicle (10) is a vehicle capable of notifying the user that the operating conditions for the driving support function have been satisfied while the vehicle is traveling; and
the second point is a point at which the notification has not been given to the user while the first vehicle (10) is traveling, and optionally wherein
the vehicle data indicates presence or absence of the notification for each point.

12. The vehicle system according to claim 10,
wherein
the second point is a point at which a corresponding driving support function has not been used when the first vehicle (10) is traveling, and optionally wherein
the vehicle data indicates status of using the driving support function for each point.

13. An information processing method comprising:
a step of obtaining, from a first vehicle (10), vehicle data relating to travel of the first vehicle (10); and
a step of identifying, based on the vehicle data, one or more first points, which are one or more points at which the first vehicle (10) has satisfied operating conditions for a predetermined driving support function included in the first vehicle (10) while the first vehicle (10) is traveling;
the information processing method being **characterized in that** it comprises a step of teaching the one or more first points to a user associated with the first vehicle (10) .

## Patentansprüche

1. Informationsverarbeitungsvorrichtung (200), die dazu ausgestaltet ist, an einem ersten Fahrzeug (10) angebracht zu werden, umfassend eine Steuereinheit (201), die zumindest einen Prozessor umfasst, der dazu ausgestaltet ist, auszuführen:
Erhalten von Fahrzeugdaten von dem ersten Fahrzeug (10), die sich auf eine Fahrt des ersten Fahrzeugs (10) beziehen, und
Identifizieren auf Basis der Fahrzeugdaten von einem oder mehreren ersten Punkten, die ein oder mehrere erste Punkte sind, an denen das erste Fahrzeug (10) Betriebsbedingungen für eine vorbestimmte Fahrunterstützungsfunktion während der Fahrt des ersten Fahrzeuges (10) erfüllt hat, die in dem ersten Fahrzeug (10) beinhaltet ist,
wobei die Informationsverarbeitungsvorrichtung (200) **dadurch gekennzeichnet ist, dass** die Steuereinheit (201) dazu ausgestaltet ist, den einen oder die mehreren ersten Punkte einem Benutzer, der mit dem ersten Fahrzeug (10) assoziiert ist, zu vermitteln.

2. Informationsverarbeitungsvorrichtung (200) nach Anspruch 2, wobei
die Steuereinheit (201) dazu ausgestaltet ist, eine Karte zu erzeugen, in welcher der eine oder die mehreren ersten Punkte einer früheren Fahrtroute des ersten Fahrzeugs (10) zugeordnet werden.

3. Informationsverarbeitungsvorrichtung (200) nach Anspruch 2, wobei
die Fahrzeugdaten einen Status des Erfüllens der Betriebsbedingungen für die Fahrunterstützungsfunktion für jeden Punkt angeben.

4. Informationsverarbeitungsvorrichtung (200) nach Anspruch 2, wobei
die Steuereinheit (201) dazu ausgestaltet ist, einen zweiten Punkt zu extrahieren, der eine vorbestimmte Bedingung von dem einen oder den mehreren ersten Punkten erfüllt, und den zweiten Punkt als ein Ziel für das Zuordnen festzulegen.

5. Informationsverarbeitungsvorrichtung (200) nach Anspruch 4, wobei
das erste Fahrzeug (10) ein Fahrzeug ist, das in der Lage ist, den Benutzer darüber zu benachrichtigen, dass die Betriebsbedingungen für die Fahrunterstützungsfunktion während der Fahrt des Fahrzeuges erfüllt wurden, und
der zweite Punkt ein Punkt ist, an dem die Benachrichtigung während der Fahrt des ersten Fahrzeuges (10) nicht an den Benutzer ausgegeben wurde, und wobei optional
die Fahrzeugdaten das Vorhandensein oder Nichtvorhandensein der Benachrichtigung für jeden Punkt angeben.

6. Informationsverarbeitungsvorrichtung (200) nach Anspruch 4, wobei
der zweite Punkt ein Punkt ist, an dem eine entsprechende Fahrunterstützungsfunktion während der Fahrt des ersten Fahrzeuges (10) nicht verwendet wurde, und wobei optional
die Fahrzeugdaten einen Status der Verwendung der Fahrunterstützungsfunktion für jeden Punkt angeben.

7. Fahrzeugsystem, umfassend eine fahrzeuginterne Vorrichtung (100), die dazu ausgestaltet ist, an einem ersten Fahrzeug (10) angebracht zu werden, und eine Servervorrichtung (200), wobei
die fahrzeuginterne Vorrichtung (100) eine erste Steuereinheit (101) aufweist, die dazu ausgestaltet ist, Fahrzeugdaten an die Servervorrichtung (200) zu übertragen, die Daten in Bezug auf die Fahrt des ersten Fahrzeugs (10) sind, und
die Servervorrichtung (200) eine zweite Steuereinheit (201) aufweist, die dazu ausgestaltet ist, auf Basis der Fahrzeugdaten, die von der fahrzeuginternen Vorrichtung (100) erhalten werden, einen oder mehrere erste Punkte zu identifizieren, die ein oder mehrere erste Punkte sind, an denen das erste Fahrzeug (10) Betriebsbedingungen für eine vorbestimmte Fahrunterstützungsfunktion während der Fahrt des ersten Fahrzeuges (10) erfüllt hat,
das Fahrzeugsystem **dadurch gekennzeichnet ist, dass** die zweite Steuereinheit (201) dazu ausgestaltet ist, den einen oder die mehreren ersten Punkte einem Benutzer, der mit dem ersten Fahrzeug (10) assoziiert ist, zu vermitteln.

8. Fahrzeugsystem nach Anspruch 7, wobei
die zweite Steuereinheit (201) dazu ausgestaltet ist, eine Karte zu erzeugen, in welcher der eine oder die mehreren ersten Punkte einer früheren Fahrtroute des ersten Fahrzeugs (10) zugeordnet werden.

9. Fahrzeugsystem nach Anspruch 8, wobei
die Fahrzeugdaten einen Status des Erfüllens der Betriebsbedingungen für die Fahrunterstützungsfunktion für jeden Punkt angeben.

10. Fahrzeugsystem nach Anspruch 8, wobei
die zweite Steuereinheit (201) dazu ausgestaltet ist, einen zweiten Punkt zu extrahieren, der eine vorbestimmte Bedingung von dem einen oder den mehreren ersten Punkten erfüllt, und den zweiten Punkt als ein Ziel für das Zuordnen festzulegen.

11. Fahrzeugsystem nach Anspruch 10, wobei
das erste Fahrzeug (10) ein Fahrzeug ist, das in der Lage ist, den Benutzer darüber zu benachrichtigen, dass die Betriebsbedingungen für die Fahrunterstützungsfunktion während der Fahrt des ersten Fahrzeuges (10) erfüllt wurden, und
der zweite Punkt ein Punkt ist, an dem die Benachrichtigung während der Fahrt des ersten Fahrzeuges (10) nicht an den Benutzer ausgegeben wurde, und wobei optional
die Fahrzeugdaten das Vorhandensein oder Nichtvorhandensein der Benachrichtigung für jeden Punkt angeben.

12. Fahrzeugsystem nach Anspruch 10, wobei
der zweite Punkt ein Punkt ist, an dem eine entsprechende Fahrunterstützungsfunktion während der Fahrt des ersten Fahrzeuges (10) nicht verwendet wurde, und wobei optional
die Fahrzeugdaten einen Status der Verwendung der Fahrunterstützungsfunktion für jeden Punkt angeben.

13. Informationsverarbeitungsverfahren, umfassend:
einen Schritt des Erhaltens von Fahrzeugdaten von einem ersten Fahrzeug (10) in Bezug auf die Fahrt des ersten Fahrzeugs (10), und
einen Schritt des Identifizierens auf Basis der Fahrzeugdaten von einem oder mehreren ersten Punkten, die ein oder mehrere erste Punkte sind, an denen das erste Fahrzeug (10) Betriebsbedingungen für eine vorbestimmte Fahrunterstützungsfunktion während der Fahrt des ersten Fahrzeuges (10) erfüllt hat, die in dem ersten Fahrzeug (10) beinhaltet ist,
wobei das Informationsverarbeitungsverfahren **dadurch gekennzeichnet ist, dass** es einen Schritt des Vermittelns des einen oder der mehreren ersten Punkte an einen Benutzer, der mit dem ersten Fahrzeug (10) assoziiert ist, umfasst.

## Revendications

1. Appareil de traitement de l'information (200) configuré pour être monté sur un premier véhicule (10), comprenant une unité de commande (201) comprenant au moins un processeur configuré pour exécuter :
l'obtention, à partir du premier véhicule (10), de données de véhicule se rapportant à un déplacement du premier véhicule (10) ; et
l'identification, sur la base des données de véhicule, de un ou plusieurs premiers points, qui sont un ou plusieurs points où le premier véhicule (10) a satisfait des conditions de fonctionnement pour une fonction d'aide à la conduite prédéterminée incluse dans le premier véhicule (10) alors que le premier véhicule (10) se déplace ;
l'appareil de traitement de l'information (200) étant **caractérisé en ce que** l'unité de commande (201) est configurée pour apprendre les un ou plusieurs premiers points à un utilisateur associé au premier véhicule (10).

2. Appareil de traitement de l'information (200) selon la revendication 2, dans lequel
l'unité de commande (201) est configurée pour générer une carte dans laquelle les un ou plusieurs premiers points sont reportés sur un itinéraire de déplacement passé du premier véhicule (10).

3. Appareil de traitement de l'information (200) selon la revendication 2, dans lequel
les données de véhicule indiquent un état de satisfaction des conditions de fonctionnement pour la fonction d'aide à la conduite pour chaque point.

4. Appareil de traitement de l'information (200) selon la revendication 2, dans lequel
l'unité de commande (201) est configurée pour extraire un deuxième point satisfaisant une condition prédéterminée à partir des un ou plusieurs premiers points, et pour établir le deuxième point comme cible pour la cartographie.

5. Appareil de traitement de l'information (200) selon la revendication 4, dans lequel
le premier véhicule (10) est un véhicule capable de notifier à l'utilisateur que les conditions de fonctionnement pour la fonction d'aide à la conduite ont été satisfaites alors que le véhicule se déplace ; et
le deuxième point est un point où la notification n'a pas été faite à l'utilisateur alors que le premier véhicule (10) se déplace, et éventuellement dans lequel
les données de véhicule indiquent une présence ou une absence de la notification pour chaque point.

6. Appareil de traitement de l'information (200) selon la revendication 4, dans lequel
le deuxième point est un point où une fonction d'aide à la conduite correspondante n'a pas été utilisée quand le premier véhicule (10) se déplace, et éventuellement dans lequel
les données de véhicule indiquent un état d'utilisation de la fonction d'aide à la conduite pour chaque point.

7. Système de véhicule comprenant un dispositif embarqué (100) configuré pour être monté sur un premier véhicule (10) et un dispositif de serveur (200), dans lequel
le dispositif embarqué (100) a une première unité de commande (101) configurée pour transmettre au dispositif de serveur (200) des données de véhicule, qui sont des données se rapportant à un déplacement du premier véhicule (10) ; et
le dispositif de serveur (200) a une deuxième unité de commande (201) configurée pour identifier, sur la base des données de véhicule obtenues à partir du dispositif embarqué (100), un ou plusieurs premiers points, qui sont un ou plusieurs points où le premier véhicule (10) a satisfait des conditions de fonctionnement pour une fonction d'aide à la conduite prédéterminée alors que le premier véhicule (10) se déplace ;
le système de véhicule étant **caractérisé en ce que** la deuxième unité de commande (201) est configurée pour apprendre les un ou plusieurs premiers points à un utilisateur associé au premier véhicule (10).

8. Système de véhicule selon la revendication 7, dans lequel
la deuxième unité de commande (201) est configurée pour générer une carte dans laquelle les un ou plusieurs premiers points sont reportés sur un itinéraire de déplacement passé du premier véhicule (10).

9. Système de véhicule selon la revendication 8, dans lequel
les données de véhicule indiquent un état de satisfaction des conditions de fonctionnement pour la fonction d'aide à la conduite pour chaque point.

10. Système de véhicule selon la revendication 8, dans lequel
la deuxième unité de commande (201) est configurée pour extraire un deuxième point satisfaisant une condition prédéterminée à partir des un ou plusieurs premiers points, et pour établir le deuxième point comme cible pour la cartographie.

11. Système de véhicule selon la revendication 10, dans lequel
le premier véhicule (10) est un véhicule capable de notifier à l'utilisateur que les conditions de fonctionnement pour la fonction d'aide à la conduite ont été satisfaites alors que le véhicule se déplace ; et
le deuxième point est un point où la notification n'a pas été faite à l'utilisateur alors que le premier véhicule (10) se déplace, et éventuellement dans lequel
les données de véhicule indiquent une présence ou une absence de la notification pour chaque point.

12. Système de véhicule selon la revendication 10, dans lequel
le deuxième point est un point où une fonction d'aide à la conduite correspondante n'a pas été utilisée quand le premier véhicule (10) se déplace, et éventuellement dans lequel
les données de véhicule indiquent un état d'utilisation de la fonction d'aide à la conduite pour chaque point.

13. Procédé de traitement de l'information comprenant :
une étape d'obtention, à partir d'un premier véhicule (10), de données de véhicule se rapportant à un déplacement du premier véhicule (10) ; et
une étape d'identification, sur la base des données de véhicule, de un ou plusieurs premiers points, qui sont un ou plusieurs points où le premier véhicule (10) a satisfait des conditions de fonctionnement pour une fonction d'aide à la conduite prédéterminée incluse dans le premier véhicule (10) alors que le premier véhicule (10) se déplace ;
le procédé de traitement de l'information étant **caractérisé en ce qu'**il comprend une étape d'apprentissage des un ou plusieurs premiers points à un utilisateur associé au premier véhicule (10).
